# EUROPÄISCHE PATENTANMELDUNG

(11) **EP 0 602 608 A1**
(43) Veröffentlichungstag der Anmeldung: **22.06.1994**
(21) Anmeldenummer: 93120153.7
(22) Anmeldetag: 14.12.1993
(51) Int. Cl.: H04B 1/38

(54) **Mobilfunkgerät**

(30) Priorität: 18.12.1992 DE 4243080
(71) Anmelder: SIEMENS AKTIENGESELLSCHAFT, D-80333 München (DE)
(72) Erfinder: Beyrich, Heinrich, D-81735 München (DE); Heidrich, Olaf, D-85276 Pfaffenhofen (DE)

(57) **Zusammenfassung**

Das Mobilfunkgerät aus einem portablen Gerät (1) und einem stationären Teil (Booster) (2) ist zur Steuerung zwischen beiden Geräten mit jeweils einer Steuerungseinheit versehen, über die eine Sendeleistungsregelung im Booster und eine Ein- und Ausschaltung des Boosters aus dem portabeln Gerät erfolgen und in Gegenrichtung das portable Gerät Informationen erhält über die Anwesenheit bzw. Nichtanwesenheit eines Boosters. Die Übertragung der Steuersignale erfolgt auf einer für die Übertragung der hochfrequenten Sende- und Empfangssignale vorgesehenen Hochfrequenz-Kabelverbindung (3).

## Beschreibung

Die Erfindung bezieht sich auf ein Mobilfunkgerät aus einem portablen Gerät und einem stationären Teil (Booster), das im portablen und stationären Betrieb mit unterschiedlicher Leistung zu betreiben ist. Ein solches Gerät ist beispielsweise aus der EP 0 260 549 A1 bekannt.

Tragbare Mobilfunkgeräte (Portables) und besonders Handfunksprechgeräte (Handhelds) haben relativ geringe Sendeleistungen und Antennengewinne. Dieser Nachteil kann bei bestimmten Anwendungen mittels eines Nachverstärkers, auch Booster genannt, in Verbindung mit einer abgesetzten Antenne ausgeglichen werden. Das kann z.B. dann der Fall sein, wenn diese Geräte in geschlossenen Fahrzeugen oder an anderen ungünstigen Übertragungsorten betrieben werden. Mobilgerät und Booster sind dann über Hochfrequenz- und Steuerungskabel verbunden, so daß der Booster an einem geeigneten Ort abgesetzt vom Mobilgerät oder zusammen mit diesem untergebracht werden kann.

Im Booster erfolgt eine Aufteilung in einen Sendeweg und einen Empfangsweg, die beide über Schalter oder Duplexer eingangs- und ausgangsseitig oder nur ausgangsseitig zusammengeführt sind. Im Sendeweg ist ein Sendeverstärker zur Erhöhung der vom Mobilgerät gelieferten Sendeleistung und im Empfangsweg ein Empfangsverstärker zum Ausgleich der Dämpfung des Empfangssignals im Booster und im Hochfrequenzkabel zum Mobilgerät angeordnet.

Bei der Realisierung des Boosters stellen sich folgende Probleme: Die Kombination beider Geräte muß die erhöhten Forderungen an den Sende- und Empfangsweg entsprechend der höheren Leistungsklasse erfüllen. Ferner sollen die Vorkehrungen im Mobilgerät möglichst gering und die elektrische Verbindung beider Geräte einfach sein. Die Hochfrequenzsignale und Steuerungssignale zwischen beiden Geräten müssen dabei so übertragen werden, daß eine Verwendung auch für neueste Funksysteme mit weiterentwickelter Übertragungstechnik, wie es z.B. das paneuropäische GSM-Mobilfunknetz darstellt, möglich ist. Bei diesem Funksystem erfolgt z.B. die Übertragung in Zeitschlitzen (Bursts), so daß auf einem Duplex-Hochfrequenzkanalpaar zur Zeit bis zu 8 und später sogar bis zu 16 Mobilteilnehmer im Zeitmultiplex versorgt werden können. Das bedeutet insbesondere, daß die Anforderungen an die verzerrungsfreie Verstärkung des Sendebursts hinsichtlich Einschwingen, Phasenverlauf und Sendeleistung auch beim Betrieb mit einem Booster erfüllt werden müssen. Dabei ist auch eine Erweiterung der einzustellenden Sendeleistungsstufen wegen der Leistungserhöhung, aber Beibehaltung der niedrigsten Leistungsstufe des Mobilgerätes zu berücksichtigen. Dies alles ist deshalb schwierig, weil zum einen aus verschiedenen Gründen (z.B. Wirkungsgrad, Verstärkungskonstanz, Kosten) ein Linearverstärker, der das Eingangssignal unverfälscht verstärkt, nicht in Betracht kommt, und zum anderen eine spezielle Steuerung des Boosters vom Mobilgerät aus für die vom Funksystem vorgegebenen Sendeleistungsstufen erforderlich ist. Zudem sind die Probleme der Bedienung des Mobilgerätes mit Booster zu beachten, wenn das Mobilgerät in einer besonderen Halterung betrieben wird, von der aus die elektrischen Verbindungen zum Booster gehen.

Die eingangs genannte EP 0 260 549 A1 und die DE 26 59 673 A1 beinhalten die Gestaltung von Booster und tragbarem Transceiver so, daß der Übergang vom tragbaren Betrieb zum Betrieb mit Booster möglichst günstig erfolgen kann, wobei auch erweiterte Funktionen im Booster vorgesehen sind. So beschreibt die DE 26 59 673 A1 eine Funktelefonieeinrichtung aus einem tragbaren Sendeempfänger, der für den Einsatz in Fahrzeugen als Einschub aufgebaut ist und beim Einschub automatische Kontaktierung mit einer Aufnahmevorrichtung im Fahrzeug hergestellt wird. In dieser sind Zusatzeinrichtungen für gemeinsame Stromversorgung, wenigstens eine größere Leistungsendstufe, Lautsprecher, Antennenanordnungen, Diversitveinrichtungen und ggf. eine Ladeeinrichtung für die Batterien des tragbaren Gerätes vorgesehen.

In der EP 0 302 455 A1 wird die Anwendung des Boosters als Relaisstelle für Mobilfunk-Basisstationen beschrieben, wobei eine mehrkanalige Umwandlung von Empfangssignalen zu Sendesignalen im Vordergrund steht.

Der Erfindung liegt die Aufgabe zugrunde, für ein Mobilfunkgerät der eingangs beschriebenen Art eine Lösung anzugeben zur Reduzierung der zusätzlichen Aufwendungen und Vorkehrungen im portablen Gerät für den Boosterbetrieb, insbesondere hinsichtlich der Vereinfachung der Steuerung zwischen Mobilgerät und Booster und der Sendeleistungsregelung im Booster.

Diese Aufgabe wird gemäß der Erfindung in der Weise gelöst, daß zur Steuerung zwischen portablem Gerät und Booster in beiden Geräten jeweils eine Steuerungseinheit vorgesehen ist, über die eine Sendeleistungsregelung im Booster und eine Ein- und Ausschaltung des Boosters aus dem portablen Gerät erfolgen und in Gegenrichtung das portable Gerät Informationen erhält über die Anwesenheit bzw. Nichtanwesenheit eines Boosters und daß die Übertragung der Steuersignale auf einer beide Geräte miteinander verbindenden, der Übertragung der hochfrequenten Sende- und Empfangssignale dienenden Hochfrequenz-Kabelverbindung erfolgt.

Die Steuerungsfunktionen zwischen den beiden Geräten beinhalten dabei u.a., daß die vom Funksystem verlangten Sendeleistungsstufen, die den sich ändernden Übertragungsverhältnissen laufend angepaßt werden sollen, sowie der Einschwingverlauf der Tastung der Sendeleistung vom Mobilgerät zusammen mit dem Booster gewährleistet werden. Außerdem erhält das Mobilgerät eine Information darüber, ob ein Booster angeschlossen ist oder nicht und der Booster kann vom Mobilgerät ein- und ausgeschaltet werden. Ein besonderer Vorteil der Erfindung besteht darin, daß die Übertragung dieser Steuersignale auf der Hochfrequenz-Kabelverbindung zwischen Mobilgerät und Booster erfolgt und dadurch keine zusätzlichen Kabel nötig sind und daß im Mobilgerät und im Booster dafür nur geringe Vorkehrungen zu treffen sind. Das wird dadurch erreicht, daß die Sollwertinformation für die Sendeleistungsregelung im Booster aus dem vom Mobilgerät gelieferten HF-Pegel durch Gleichrichtung gewonnen wird.

Der Booster ist in vorteilhafter Weise so ausgestaltet, daß er sich trotz seiner Nichtlinearität wie ein Verstärker mit zwei steuerbaren Bereichen unterschiedlicher, aber konstanter Verstärkung verhält. Damit gelingt es, die unteren Leistungsstufen des Mobilgerätes unverstärkt mit der ersten Verstärkereinstellung des Boosters und die höheren, vom Mobilgerät allein nicht erbringbaren Leistungsstufen mit der zweiten, höheren Verstärkungseinstellung zum Antennenausgang zu übertragen.

Weitere vorteilhafte Weiterbildungen und Ausgestaltungen des Erfindungsgegenstandes sind in den Unteransprüchen 4 bis 8 angegeben.

Nachstehend wird die Erfindung anhand von in der Zeichnung dargestellten Ausführungsbeispielen näher erläutert.

Es zeigen:
- Figur 1: im Blockschaltbild als Mobilgerät ein Handheld und einen Booster und
- Figuren 2 und 3: eine Boostersteuerung mit einem zugehörigen Zeitdiagramm.

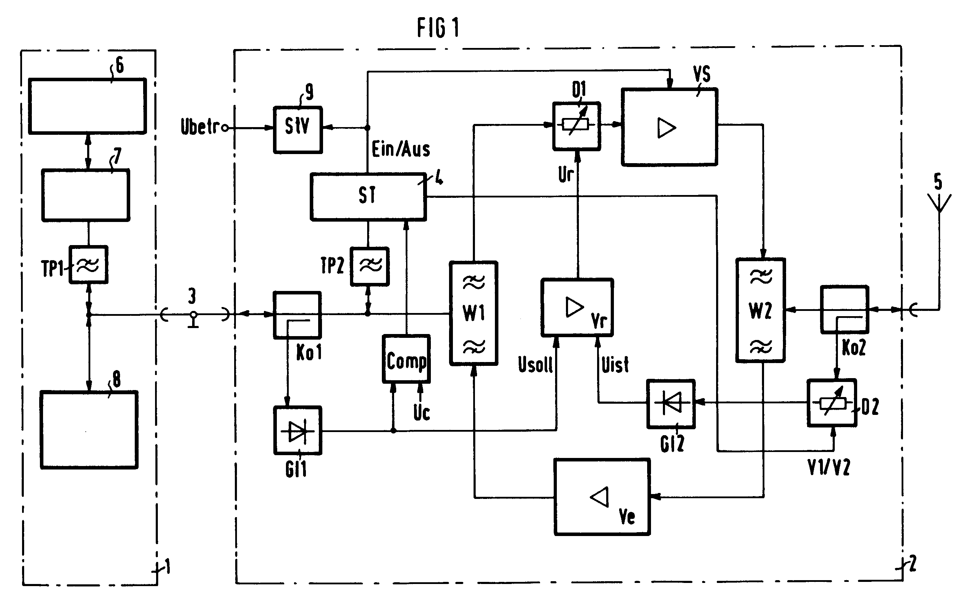

Figur 1 zeigt als Mobilgerät ein Handheld 1 und einen Booster 2, die beide nur über ein Koaxialkabel 3 mit vorbestimmter HF-Dämpfung miteinander verbunden sind. Über dieses Kabel 3 erfolgt die Übertragung sowohl der hochfrequenten Sende-Empfangssignale als auch die der niederfrequenten, digialen Steuersignale zwischen beiden Geräten. Die Dämpfung des Kabels wird durch die Kabeltype und die Kabellänge festgelegt, damit die HF-Eigenschaften des Systems unabhängig vom Einbau immer gewährleistet sind.

Der Booster 2 besteht aus einem Sendezweig mit einem einstellbaren Dämpfungsglied D1 und einem Verstärker Vs und dem Empfangszweig mit einem Verstärker Ve, die beide mit Hilfe von Frequenzweichen (Duplexer) W1 und W2 eingangs- und ausgangsseitig zusammengeschaltet sind. Zum Sendezweig gehören auch jeweils ein am Eingang und Ausgang des Boosters 2 angeordneter Koppler Ko1 und Ko2, deren Ausgang vom durchgehenden Weg mit den Frequenzweichen W1 bzw. W2 verbunden ist. Am Ausgang der ausgekoppelten Wege ist am Koppler Ko1 ein Gleichrichter G11, am Koppler Ko2 ein einstellbares Dämpfungsglied D2 und nachfolgend ein Gleichrichter G12 angeschaltet. Die Ausgänge der Gleichrichter G11 und G12 sind an die beiden Eingänge für den Sollwert und Istwert eines Regelverstärkers Vr angeschaltet. Die beiden Koppler Ko1 und Ko2 bilden zusammen mit den Gleichrichtern G11 und G12, den einstellbar ausgebildeten Dämpfungsgliedern D1 und D2 und dem Regelverstärker Vr, dessen Ausgang die Regelspannung Ur für das einstellbare Dämpfungsglied D1 liefert, den Regelkreis zur automatischen Regelung der Sendeleistung. Der Regelkreis ist so ausgelegt, daß er in Abhängigkeit von einem Steuersignal die Verstärkung des Sendeweges zwischen zwei festen Werten V1 und V2 umschalten und konstant halten kann. Das Steuersignal wird von einer Steuerungseinheit 4 abgegeben, die einen über einen Tiefpaß TP2 mit dem Ausgang des Kopplers Ko1 verbundenen Eingang und einen weiteren, über einen Komparator Comp mit dem Ausgang des Gleichrichters G11 verbundenen Eingang aufweist und deren zwei Ausgänge mit dem Sendeverstärker Vs einerseits und dem einstellbaren Dämpfungsglied D2 andererseits verbunden sind.

Die konstante Verstärkung wird dadurch erreicht, daß der Sollwert Usoll für die Regelung mittels des Kopplers Ko1 und des Gleichrichters G11 aus dem vom Handheld 1 gelieferten HF-Signal und der Istwert Uist mittels des zweiten Kopplers Ko2 und des zweiten Gleichrichters G12 aus dem am Antennenausgang des Boosters 2 anliegenden hochfrequenten Sendesignal gewonnen wird. Die Umschaltung der Verstärkung zwischen zwei festen Werten V1 und V2 ergibt sich dadurch, daß die Dämpfung des Dämpfungsgliedes D2 und damit der Istwert Uist für die Regelung entsprechend umgeschaltet wird. Wesentlich ist dabei, daß das Dämpfungsglied D2 auf der HF-Seite vor dem Gleichrichter G12 angeordnet ist, wodurch beide Gleichrichter, unabhängig von der gewählten Verstärkung, immer mit etwa gleichen HF-Pegeln angesteuert werden, so daß sich die Auswirkung der Nichtlinearität von beiden Gleichrichterschaltungen im Regelkreis gut kompensieren kann. Diese Art der Regelung auf konstante Verstärkung hat den Vorteil, daß der Booster wie ein transparenter Verstärker wirkt und für den Wert der Dachleistung und für die Formung ihrer Anstiegsfunktion keine besonderen Steuersignale vom Handheld benötigt. Es muß lediglich darauf geachtet werden, daß die Regelung so ausgelegt wird, daß sie der Anstiegs- und Abfallgeschwindigkeit des vom Handheld gelieferten HF-Signals folgen kann und das HF-Eingangssignal möglichst unverzerrt verstärkt wird.

Die im Booster 2 erforderlichen Steuersignale beschränken sich deshalb auf zwei Signale, nämlich auf das zur Verstärkungsumschaltung und das zur Ein-/Ausschaltung aller Stromverbraucher bis auf die Schaltung, die die Steuerungsfunktion zwischen Booster und Handheld im Stand/by-Betrieb sicherstellen muß.

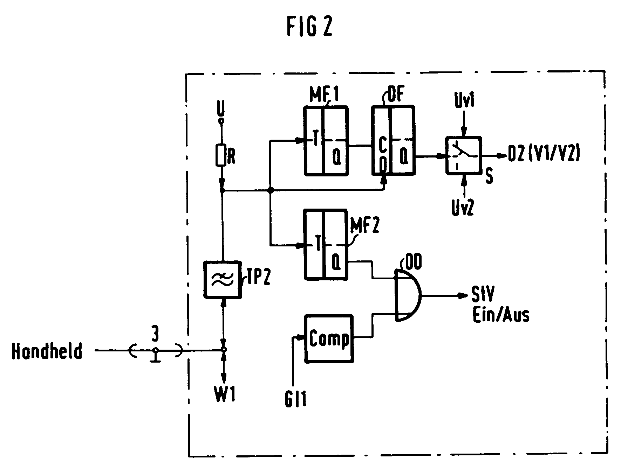

Der in Figur 1 dargestellte Block 4 für die Steuerung wertet deshalb auch nur diese beiden vom Handheld kommenden Signale zur Steuerung der genannten Funktionen aus und gibt lediglich ein Signal zur Anwesenheitskontrolle an das Handheld zurück. Diese Steuerungseinheit kann deshalb sehr einfach und ohne Mikroprozessor realisiert werden. Ein Ausführungsbeispiel hierfür ist in Figur 2 dargestellt und wird an späterer Stelle näher beschrieben. Die Ankopplung dieser Steuerungseinheit 4 an die koaxiale Verbindungsleitung 3 zum Handheld 1 erfolgt über ein einfaches, vorstehend bereits erwähntes Tiefpaßfilter TP2, das so realisiert werden kann, daß die HF-Übertragung ungestört bleibt.

Der Verstärker Ve im Empfangskreis hat die Aufgabe, die Dämpfung der von der Antenne 5 kommenden hochfrequenten Empfangssignale, verursacht durch die Weichen W1 und W2 und das koaxiale Verbindungskabel 3 zum Handheld 1, rauscharm auszugleichen, so daß sich für die Kombination aus Handheld und Booster keine Beeinträchtigung der Empfängereigenschaften ergibt. Die Koppler Ko1 und Ko2 sind für den Empfangsweg praktisch dämpfungslos und verhindern aber andererseits, daß die Empfangssignale auf die Leistungsregelung des Senders Einfluß nehmen können. Das wird durch die Koppeldämpfung und Richtwirkung der Koppler für die Empfangssignale in Richtung der Gleichrichterschaltungen G11 und G12 erreicht.

Das Handheld 1, das für den Betrieb mit dem erfindungsgemäßen Booster 2 vorgesehen ist, besitzt eine geringfügig erweiterte Steuerschaltung, die die vorher beschriebenen beiden Steuersigale für die Verstärkungseinstellung und die Ein-/Ausschaltung über das koaxiale Verbindungskabel zum Booster 2 liefern und die Anwesenheitsinformation des Boosters 2 auf dem gleichen Weg auswerten kann. Die Steuerungseinheit für das Handheld ist mit 6, die für den Booster mit 7 bezeichnet. Beide Steuerungseinheiten sind über einen Tiefpaß TP1 an die koaxiale Verbindungsleitung 3 angekoppelt. Der Transceiver des Handhelds ist mit 8 bezeichnet.

Werden für den Boosterbetrieb höhere Anforderungen an die Empfangsleistung gestellt als für das Handheld allein, wie das im bereits genannten GSM-Netz der Fall ist, muß der Empfänger des Handhelds entsprechend dafür ausgelegt werden.

Ein Beispiel für eine Realisierung der Boostersteuerung ist in Figur 2 dargestellt. Hierbei wird mit Hilfe eines Monoflops MF1 und eines nachfolgenden D-Flipflops DF im Booster zum Zeitpunkt T1 das vom Handheld kommende Steuersignal abgetastet, gespeichert und einem Schalter S zugeführt, der die Umschaltung des Dämpfungsgliedes D2 und damit der Verstärkung mittels der Spannungen Uv1 bzw. Uv2 vornimmt. Das Ein-/Aus-Schaltsignal für den Booster wird mit einem zweiten Monoflop MF2 dem Komparator Comp und einem eingangsseitig mit den Ausgängen von Monoflop MF2 und Komparator verbundenen ODER-Gatter OG gewonnen. Dazu erzeugt das Monoflop MF2 einen Impuls, dessen zeitliches Ende (T3) mit dem vom Handheld kommenden HF-Signal zusammenfällt. Der Komparator Comp hat die Aufgabe, das Vorhandensein des HF-Signals zu überwachen. Die Verknüpfug der Ausgänge von Monoflop MF2 und Komparator durch das ODER-Gatter ergibt das gewünschte Steuersignal (vgl. hierzu Block 9 in Figur 1). Beide Monoflops werden mit der negativen Flanke des Steuersignals vom Handheld gestartet.

Bei Funksystemen, wie beim obengenannten GSM-Netz, mit periodisch wiederkehrenden Sendebursts können der Komparator und das ODER-Gatter eingespart werden, da das übrigbleibende retriggerbare Monoflop MF2 dann nur eine Impulslänge entsprechend einer Burstperiode des Sendesignals erzeugen muß.

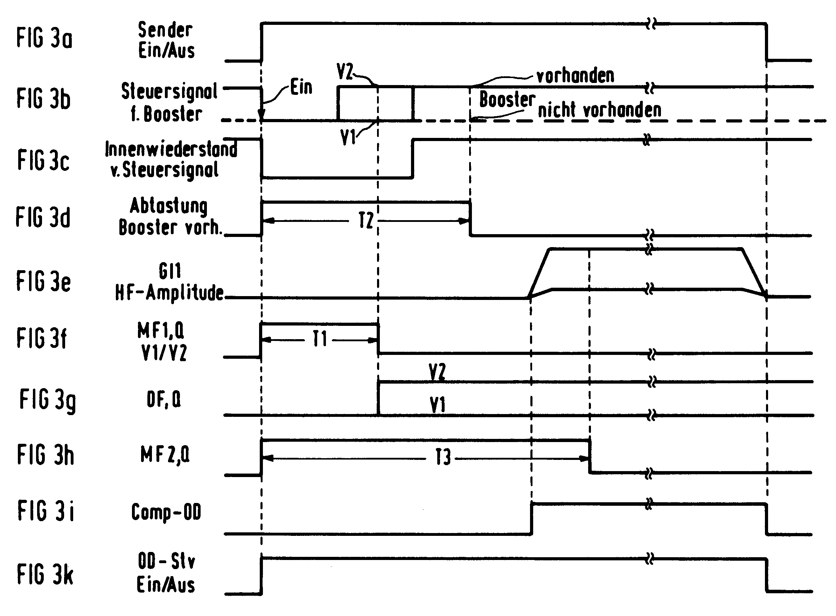

Im Zeitdiagramm nach Figur 3 sind unter a), b), c) und d) Funktionsabläufe im Handheld wiedergegeben, unter e), f), g), h), i) und k) Funktionsabläufe des Boosters. Im einzelnen beinhalten a) die Sender-Ein/Ausschaltung,
b) das Steuersignal für den Booster, c) den Innenwiderstand vom Steuersignal, d) die Abtastung über das Vorhandensein des Boosters, e) die HF-Amplitude am Gleichrichter G11, f) Zeitabläufe am Monoflop MF1,
g) Zeitablaufe am D-Flipflop FD hinsichtlich der Einstellung der Verstärkungsstufen V1 und V2 und h), i) und k) Funktionsabläufe am zweiten Monoflop MF2, am Komparator und ODER-Gatter sowie am Ausgang des ODER-Gatters.

Zum Zeitpunkt T2 (vgl. d) im Zeitdiagramm) erfolgt im Handheld die Abfrage, ob ein Booster angeschlossen ist oder nicht. Dies wird dadurch ermöglicht, daß der Booster-Treiber der Steuerschaltung im Handheld mit einem sogenannten Tristate-Ausgang ausgestattet wird. Dadurch kann der Innenwiderstand des Treibers zu dieser Zeit hochohmig geschaltet werden und die ebenfalls hochohmig im Booster über den Widerstand R eingeführte Spannung U zum Handheld gelangen und abgefragt werden. Die Zeitabläufe der Boostersteuerung können so gewählt werden, daß an die Bauteile der Steuerung keine besonderen Anforderungen gestellt werden müssen.

Neben der geschilderten einfachen Steuerungssignalisierung zwischen beiden Geräten können natürlich auch andere Datenübertragungsverfahren angewendet werden.

Eine Ausführungsvariante kann ferner darin bestehen, daß die Zusammenführung des Sende- und Empfangsweges anstelle von Frequenzweichen mit Schaltern realisiert wird. Dies ist allerdings nur bei Funksystemen mit Zeit-Duplex-Betrieb möglich. Das bedeutet für das Mobilgerät, daß der Sender und der Empfänger nicht gleichzeitig in Betrieb sein müssen und mit Hilfe von HF-Schaltern abwechselnd in den Übertragungsweg zur Antenne eingeschaltet werden können. Eine solche Abwandlung ist im Booster dadurch möglich, daß eine oder beide Frequenzweichen durch entsprechende Umschalter ersetzt werden. Zur Steuerung dieser Schalter wird vom Handheld kein zusätzliches Signal benötigt. Dies kann beispielsweise bei der Boostersteuerung nach Figur 2 mit dem im Booster gewonnenen Ein/Aus-Signal so geschehen, daß während des Ein-Signals der Sendeverstärker und während des Aus-Signals der Empfangsverstärker in den aktiven Übertragungsweg geschaltet wird.

## Patentansprüche

1. Mobilfunkgerät aus einem portablen Gerät und einem stationären Teil(Booster), das im portablen und stationären Betrieb mit unterschiedlicher Leistung zu betreiben ist, dadurch **gekennzeichnet,** daß zur Steuerung zwischen portablem Gerät und Booster in beiden Geräten jeweils eine Steuerungseinheit vorgesehen ist, über die eine Sendeleistungsregelung im Booster und eine Ein- und Ausschaltung des Boosters aus dem portablen Gerät erfolgen und in Gegenrichtung das portable Gerät Informationen erhält über die Anwesenheit bzw. Nichtanwesenheit eines Boosters und daß die Übertragung der Steuersignale auf einer, beide Geräte miteinander verbindenden, der Übertragung der hochfrequenten Sende- und Empfangssignale dienenden Hochfrequenz-Kabelverbindung erfolgt.

2. Mobilfunkgerät nach Anspruch 1, dadurch **gekennzeichnet,** daß die Sollwertinformation für die Sendeleistungsregelung im Booster aus dem vom portablen Gerät gelieferten HF-Pegel durch Gleichrichtung gewonnen wird.

3. Mobilfunkgerät nach Anspruch 1 oder 2, dadurch **gekennzeichnet,** daß sich der Booster wie ein Verstärker mit zwei steuerbaren Bereichen unterschiedlicher, aber konstanter Verstärkung verhält.

4. Mobilfunkgerät nach Anspruch 3, **gekennzeichnet** durch einen im Booster angeordneten Regelkreis, der in Abhängigkeit von einem Steuersignal des portablen Gerätes die Verstarkung des Sendeweges des Boosters zwischen zwei festen Werten umschaltet und konstant hält.

5. Mobilfunkgerät nach Anspruch 4, dadurch **gekennzeichnet,** daß für eine konstante Verstärkung der Sollwert für die Regelung aus dem vom portablen Gerät kommenden HF-Signal und der Istwert aus dem am Antennenausgang des Boosters anliegenden hochfrequenten Sendesignal gewonnen wird.

6. Mobilfunkgerät nach Anspruch 4 oder 5, dadurch **gekennzeichnet,** daß die Umschaltung der Verstärkung zwischen den beiden Werten durch Umschaltung der Dämpfung eines im Regelkreis angeordneten Dämpfungsgliedes erfolgt.

7. Mobilfunkgerät nach einem der Ansprüche 4 bis 6, dadurch **gekennzeichnet,** daß die Regelung so ausgelegt ist, daß sie der Anstiegs- und Abfallgeschwindigkeit des vom portablen Gerät gelieferten HF-Signals folgen kann.

8. Mobilfunkgerät nach einem der Ansprüche 1 bis 7, dadurch **gekennzeichnet,** daß die Steuerungseinheit des portablen Gerätes die Steuersignale für die Verstärkungseinstellung und die Ein/Ausschaltung über das koaxiale Verbindungskabel zum Booster liefert und die Anwesenheitsinformation des Boosters auf dem gleichen Weg auswertet.
